# EUROPEAN PATENT SPECIFICATION

(11) **EP 2 702 393 B1**
(45) Date of publication and mention of the grant of the patent: **12.04.2017**
(21) Application number: 12718589.0
(22) Date of filing: 30.04.2012
(51) Int. Cl.: G01N 21/53, G01P 5/26, G01P 13/02, G01S 17/95, F03D 7/02, F03D 7/04

(54) **METHOD AND APPARTAUS FOR PROTECTING WIND TURBINES FROM EXTREME EVENTS**
VERFAHREN UND VORRICHTUNG FÜR DEN SCHUTZ VON WINDTURBINEN VOR EXTREMEN EREIGNISSEN
PROCÉDÉ ET APPAREIL DE PROTECTION D'ÉOLIENNES CONTRE LES ÉVÉNEMENTS EXTRÊMES

(30) Priority: 28.04.2011 US 201161479854 P; 30.05.2011 DK 201170267 P
(43) Date of publication of application: 05.03.2014
(73) Proprietor: Vestas Wind Systems A/S, 8200 Aarhus N (DK)
(72) Inventor: BOWYER, Robert, London SW6 6LE (GB); WESTERGAARD, Carsten Hein, Houston, Texas 77010 (US); CREABY, Justin, Broomfield, CO 80020 (US); SPRUCE, Chris, Leatherhead Surrey KT23 4PD (GB)
(74) Representative: Vestas Patents Department
(86) International application number: PCT/DK2012/050143
(87) International publication number: WO 2012/146258

(56) References cited:
- EP-A1- 2 133 712
- EP-A1- 2 213 875
- US-A1- 2006 140 764
- US-A1- 2007 171 396
- US-A1- 2010 135 789

## Description

### FIELD OF THE INVENTION

This invention relates generally to wind turbines and, in particular, to the advance detection of wind conditions before they arrive at the wind turbine, and the control of wind turbines in response to such detected conditions.

### BACKGROUND TO THE INVENTION

It is important for a wind turbine to have knowledge of the wind conditions that are approaching the wind turbine so that the turbine controller has time to react to oncoming conditions to change operating parameters of the turbine in accordance with detected wind conditions. Depending on the nature of the detected conditions the controller may seek to optimise the energy extracted form the air by the turbine blades, for example at lower wind speeds, or to reduce the loading on the blades to avoid damage in the case of higher wind speeds. In extreme cases, the controller may yaw the rotor mechanism out of the wind or even perform an emergency shutdown if the wind conditions are sufficiently severe to risk damage to turbine components.

It is well known in the art to provide a remote sensing apparatus on the turbine which looks ahead of the turbine, typically a few rotor diameters or several hundred metres, to detect wind conditions ahead of the turbine. As control of the turbine will usually require pitching of the blades, a few seconds is required to adjust the turbine in response to detected conditions requiring the wind conditions to be measured sufficiently far in advance to enable time for the data to be processed and the blades to be pitched before the wind arrives.

One well-known sensing apparatus is a Lidar which is typically mounted on the wind turbine nacelle behind the blades or in the rotor hub. A nacelle-mounted Lidar may be provided with a scanning mechanism to enable the Lidar to scan an area around an axis offset with respect to the rotational axis of the blades. Multiple scanning beams may be used which enable more wind parameters to be detected, including wind speed, direction, horizontal and vertical shear, all of which are important inputs to the controller. Hub mounted Lidar can use the rotation of the hub to provide scanning although multiple beams may be used on the same look direction to increase the scanning speed.

One example of a nacelle-mounted Lidar is disclosed in EP-A-0970308 which discloses the use of a Lidar or other remote scanning apparatus, mounted on the nacelle of the wind turbine, and sensing conditions several rotor diameters upstream of the turbine. Based on the sensed conditions, the controller, which may be on board the turbine or may be a separate wind park controller, can instruct an individual turbine or group of turbines to change their operating parameters before the sensed wind conditions arrive at the turbine. An example of a hub mounted Lidar is disclosed in US-A-20060140764, in which Lidar is mounted in the hub and has a plurality of look directions that are inclined away from the rotational axis of the hub so that rotation of the hub ensures scanning. The multiple look directions may be achieved by using a number of dedicated Lidar systems and/or by using multiplexed Lidars or a beam splitter.

Document US2010/0135789 shows a further example of a system disclosing an upwind wind condition measurement device in the form of a Lidar.

### SUMMARY OF THE INVENTION

While these prior art remote sensing techniques are effective in detecting oncoming wind conditions with a reasonable degree of accuracy they require sophisticated Lidar apparatus having multiple scanning beams and are consequently very expensive. We have appreciated that there is a need for a lower cost solution to the problem.

According to a first aspect of the invention there is provided a control system for a wind turbine, comprising: a remote sensing apparatus mounted on the wind turbine for scanning around a substantially vertical axis and having a look direction for measurement of a wind parameter in a measurement volume at a predetermined distance from the remote sensing apparatus; wherein the remote sensing apparatus and the wind turbine are arranged such that the remote sensing apparatus performs a complete scan around the substantially vertical axis; and a controller for receiving signals from the remote sensing apparatus and outputting a control signal based on the received signals to control a parameter of the wind turbine.

This aspect of the invention also resides in a method of controlling a wind turbine, comprising: sensing a wind parameter with a remote sensing apparatus at a measurement volume a predetermined distance along a look direction from the remote sensing apparatus, the sensing comprising scanning the look direction around a substantially vertical axis and generating an output signal; wherein the remote sensing apparatus and the wind turbine are arranged such that the remote sensing apparatus performs a complete scan around the substantially vertical axis; and controlling a parameter of the wind turbine based on the output signal from the remote sensing apparatus, the output signal being received and processed by a controller to output a control signal based on the output signals.

This aspect of the invention has the advantage of providing a simple, low cost method and apparatus for protecting a wind turbine against damage caused by extreme events. As the sensing apparatus scans around a vertical axis it can detect wind events which are approaching from any angle with respect to wind turbine nacelle. This is not possible in prior art Lidar based systems which sense generally in a forward looking direction, either along or offset with respect to the axis of rotation of the rotor. The Lidar need only have a single scanning beam enabling a low cost apparatus to be used.

Preferably, the remote sensing apparatus is a Lidar which may have a single scanning beam which performs a 360 degree scan around the substantially vertical axis. Alternatively, the remote sensing apparatus may comprise a plurality of Lidars each arranged to perform a portion of a complete scan around the substantially vertical axis.

Preferably, the Lidar generates velocity data from a plurality of points in the measurement volume, and wherein the controller derives a peak velocity and a measure of variance from the velocity data. The peak velocity and measure of variance may be derived from fast Fourier transforms (FFT) of signals received from the plurality of points in the measurement volume.

Preferably, the controller generates the output control signal from inputs of peak velocity and variance to generate an output control signal if the controller determines that the inputs indicate a risk of damage to turbine components. This may be achieved through use of a look-up table of wind velocity against measure of variance.

In a preferred embodiment, the peak velocity and variance inputs are averaged over a plurality of scans. This improves the reliability of measurements as the effects of transients are averaged out.

A second aspect of the invention provides a control system for a wind turbine, comprising: a Lidar apparatus mounted on the wind turbine for scanning a region around the wind turbine and having a beam having a look direction for measurement of a wind parameter in a measurement volume at a predetermined distance from the Lidar apparatus; wherein the Lidar determines velocity related data for a plurality of points within the measurement volume; and a controller for deriving a peak velocity and a measure of variance from the velocity related data and outputting a control signal based on the peak velocity and measure of variance to control a parameter of the wind turbine.

The second aspect of the invention also provides a method of controlling for a wind turbine, comprising: scanning a region around the wind turbine with a Lidar apparatus mounted on the wind turbine, the Lidar apparatus having a beam having a look direction for measurement of a wind parameter in a measurement volume at a predetermined distance from the Lidar apparatus, wherein the Lidar apparatus determines velocity related data for a plurality of points within the measurement volume, and controlling a parameter of the wind turbine by a control signal generated by a controller in response to inputs of peak velocity and a measure of variance derived from the velocity related data from the Lidar apparatus.

Embodiments of this aspect of the invention also have the advantage that a relatively simple and low cost Lidar can be used to detect wind events. Commercially available Lidar outputs a measure of wind velocity but derives this measure from wind data relating to a large number of points within the measurement volume. We have appreciated that this data contains information about the wind profile, for example its variance and turbulence, which is useful in determining whether or not a controller needs to take evasive action to change parameters of the turbine to avoid damage when the sensed wind event arrives at the wind turbine.

As with the first aspect of the invention, it is preferred that the peak velocity and measure of variance are determined from fast Fourier transforms of data from the plurality of points in the measurement volume and that the controller comprises a look-up table of wind velocity against measure of variance. The peak velocity and variance inputs may also be averaged over a plurality of scans.

In both aspects of the invention, the remote sensing apparatus is preferably arranged on the wind turbine nacelle although other arrangements are possible. In both aspects of the invention the control may be applied when the wind turbine is either in a parked or an operating state.

Both aspects of the invention also provide a wind turbine having a control system as defined or controlled according to the method defined.

### BRIEF DESCRIPTION OF DRAWINGS

Embodiments of the invention will now be described, by way of example only, and with reference to the accompanying drawings in which:
Figure 1 is a plan of a wind turbine having a remote sensing device embodying the invention;
Figure 2 shows the frequency distributions for a measurement volume from which incoherent and coherent wind conditions can be inferred;
Figure 3 shows how a controller may derive control signals from velocity and variance inputs;
Figure 4 shows the velocity measurements for three successive 360 degree scans;
Figure 5 shows how the variance may be represented in a scan; and
Figure 6 shows how data obtained from a multiple range gate Lidar may be shown.

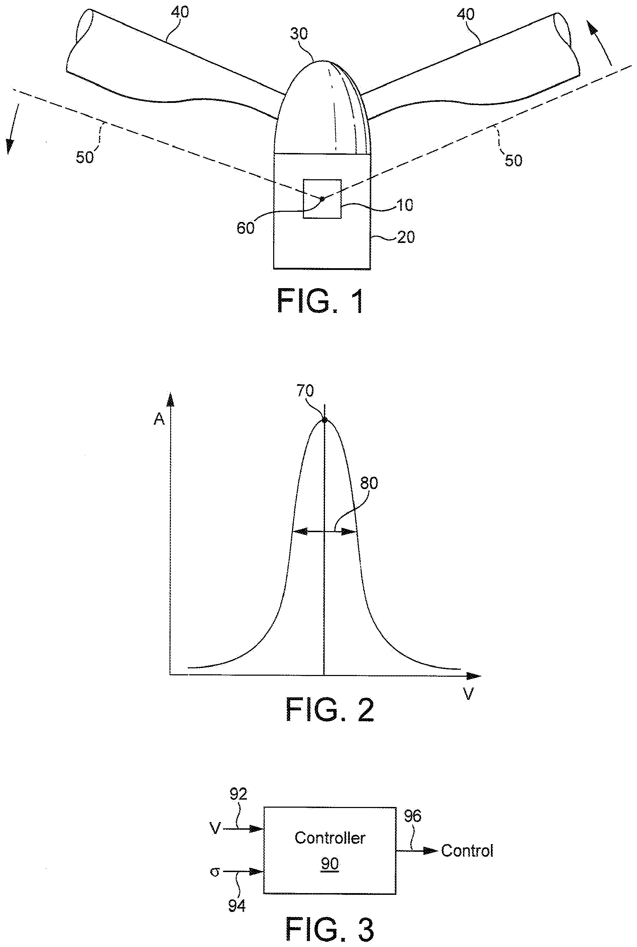

Figure 1 illustrates an embodiment of the invention in which a remote sensing apparatus 10 is mounted on the nacelle of a wind turbine 20 behind the rotor hub 30 to which the blades 40 are mounted. The sensing apparatus may be mounted elsewhere, for example on the underside of the nacelle. The remote sensing apparatus is preferably a Lidar although other suitable remote sensing apparatus may be used. The Lidar is a single beam Lidar which is arrange to scan around a vertical or near-vertical axis. Preferably, the sensing apparatus can perform a full 360 degree scan around the vertical scan axis. The purpose of the scan is to investigate wind conditions all around the turbine and not just over a limited area in front of the rotor. This is important in the detection of extreme events such as gusts as a gust may be accompanied by a very rapid change in wind direction and may hit the turbine from any angle. The Lidar measures the wind conditions at more or more distances from the wind turbine, preferably one or more rotor diameters away from the wind turbine. The distance is chosen to enable the wind turbine controller to generate control signals based on sensed wind parameters and to command the turbine to alter operating parameters such as blade pitch angle such that the alteration is completed before the detected wind conditions arrive a the wind turbine. Although a single 360 degree scan is preferred, two 180 degree scans may be provided or a larger number of scans each having a smaller sweep. The 180 degree scans need not be exactly 180 degrees and there may be some overlap between the scans or even a small unscanned area although this is not preferred.

In figure 1 a single scanning beam 50 is shown in two positions rotating counter clockwise around a vertical or substantially vertical axis 60 thereby performing a 360 scan around the wind turbine.

Beam scanners are well known and any type of scanning mechanism may be used, for example using a rotating mirror or polygon to deflect the laser beam or by using multiple lenses with a switching mechanism or a beam splitter or a pulsed mechanism.

As the purpose of this Lidar is to look for changes in wind velocity, only a single scanning beam is needed, making the Lidar relatively simple and cheap compared to devices that use multiple beams. This simplicity is achieved by the manner in which data retrieved by the Lidar is processed. In a standard commercial Lidar, the velocity of particles in a measurement volume is detected. Signals sensed by the Lidar are processed as frequency data using fast Fourier transforms (FFTs) and a velocity value is output. We have appreciated that the FFT data may be analysed to retrieve useful data about the wind which can then be used for control. In particular the FFT data can be analysed to extract information about the variance of the wind in the measurement volume from which a measure of turbulence can be inferred and used by the turbine controller, together with velocity information to control the turbine to protect against events such as gusts.

The FFT data gives a spread of frequencies for particles moving in the detection volume. If these frequencies cluster around a narrow spike it suggests that all the particles are moving at the same or a similar velocity, from which it may be inferred that the wind is relatively coherent. However, if the frequency distribution is broad, it suggests that particles in the measurement volume are moving at a wide range of velocities and that the wind at that point might be a very incoherent and turbulent gust. This is very important information to establish as, once detected, the turbine can take action to avoid the effect of the gust, for example by pitching the blades out of the wind or by shutting down the turbine.

Figure 2 illustrates the distribution of FFT data from a measurement volume. The vertical axis is amplitude and the horizontal axis represents frequency. In figure a measure of velocity, here the peak, or most common velocity 70 can be identified and the width of the distribution 80 can be measured at a predetermined distance from the peak velocity so that an estimation can be made of the variance of the wind. Other measured of velocity may be used. Once the peak, or most common, wind velocity has been identified, that measurement provides an absolute value of wind velocity in the measurement volume. Other statistical treatments of the data could be used to produce a velocity for the measured volume.

Thus, by examining the frequency spectrum of the raw data obtained by the Lidar, an estimate of actual wind speed can be made together with an estimate of the variance of the wind based on the width of the distribution around the peak velocity. Thus, an output may be provided which combines velocity with a measure of variance. This may be input to the turbine controller as illustrated in figure 3, in which the controller is shown at 90 as having velocity and variance inputs 92, 94. The controller examines the inputs, for example by referring to a look up table of velocity to variance to determine whether the wind represents a gust of sufficient strength that evasive action need be taken. If it does, a control signal 96 is output to alter one or more operational parameters of the wind turbine. Thus, the controller will take both velocity and the estimate of variance into account. For example, a high velocity with a high degree of variance may not be regarded as requiring action whereas a lower velocity with a lower variance may represent a greater threat and require evasive action. The evasive action may comprise varying the pitch angle of the blades to pitch out of the wind to reduce loading; moving the rotor out of the wind by commanding the yaw drive to yaw the nacelle, or in the case of an extreme measurement, commencing an emergency shutdown of the turbine. Where the gust is detected as approaching from an angle that is not normal to the rotor the yaw drive may yaw the rotor into the wind to balance the loading across the blade.

The embodiment described provides a simple system for protecting a wind turbine against potentially damaging gusts. It does not require the velocity determination to be particularly accurate and a determination that is approximately +/- 5m/s of the true value is sufficiently accurate.

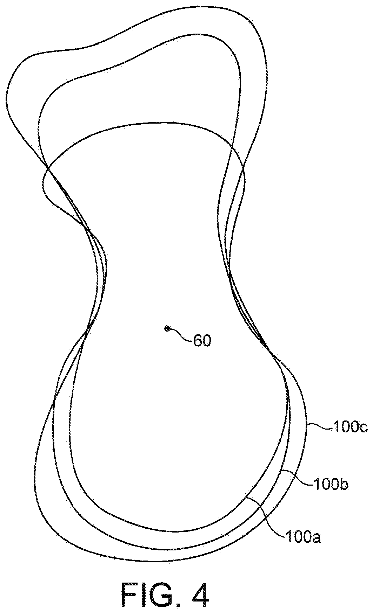

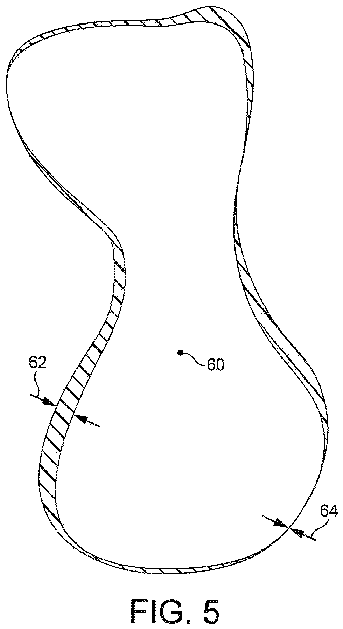

Figure 4 shows how data from the Lidar may be built up over time and multiple scans. In the figure the origin of the scan is shown at 60 and each of the loops 100 a, b and c represents the peak velocity as the scan revolves through 360 degrees around the turbine. This accumulated data may be used to refine the velocity and variance signals to avoid transients and the data communicated to the controller may represent the average values from a plurality of scans, for example 3 to 5. Figure 5 shows a single one of the multiple scans, for simplicity, but shows how the thickness of the scan may represent the variance of the data as the scan progresses. Thus at 62, the thickness is greatest representing a larger variance and at 64, for example, the line is at its thinnest, representing a small variance. The representation of figure 5 effectively superimposes the distribution of figure 2 onto the scan of figure 4.

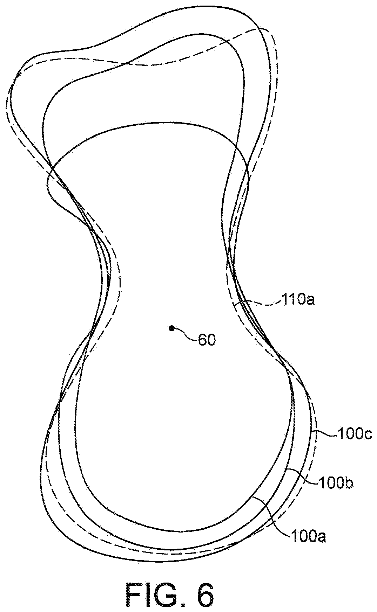

In the embodiment described, the scanner is a simple, cheap scanning device, for example a continuous beam Lidar. Such devices are capable only of scanning at a single range. In an alternative embodiment of the invention a more complex pulsed beam Lidar may be used which can scan at multiple ranges. At each of the ranges multiple scans will be built up, as shown in Figure 4 with each scan line being represented by a thickness that represents the variance. This approach enables a measure of the coherence of the wind to be established so that the control system can tell whether the conditions observed at one range a transient, and will dissipate as the volume of air approaches the wind turbine, or whether they are more stable. Figure 6 shows the scans of figure 4 with one of those obtained at a second range 110a (for clarity) shown as a dashed line.

In a wind park, a system embodying the invention may be arranged on a single turbine or on a plurality of the turbines. This is possible as the Lidar required is relatively low cost making it more economically viable to use multiple devices. The controller may be onboard the turbine to which the Lidar is fitted but may also communicate with a wind park controller that controls multiple turbines in the wind park to enable the determination of gust risk to be communicated to other turbines. Alternatively, the velocity and variance signals may be communicated directly to the wind park controller which has responsibility for developing the control signals and communicating them to the turbine on which the Lidar is mounted.

In the description above, it has been assumed that the turbine is in an operating state when the Lidar is scanning. This need not be the case and the Lidar and the controller may operate even when the turbine is in a parked state. As an extreme event can cause damage to turbine components even when the turbine is parked, the controller may still operate to take precautionary action such as yawing the rotor out of the wind and/or pitching the blades to reduce loads.

As well as offering protection from extreme events, embodiments of the invention may enable wind turbines to be made more cheaply with less material in key components. At present, those key components are designed to withstand the effects of extreme events without damage. Embodiments of the invention enable components to be used that are less robust, using less material as evasive action can be taken to avoid the components having to bear the loading of the extreme events.

## Claims

1. A control system for a wind turbine, comprising:
a Lidar apparatus mounted on the wind turbine for scanning around a substantially vertical axis and having a look direction for measurement of a wind parameter in a measurement volume at a predetermined distance from the Lidar apparatus;
and
a controller for receiving signals from the Lidar apparatus and outputting a control signal based on the received signals to control a parameter of the wind turbine
wherein the Lidar generates velocity data from a plurality of points in the measurement volume, and wherein the controller derives a measur of velocity and a measure of variance from the velocity data, and where the controller generates the output control signal from inputs of velocity and variance to generate an output control signal if the controller determines that the inputs indicate a risk of damage to turbine components, the system being **characterised by** the Lidar apparatus and the wind turbine being arranged such that the Lidar apparatus performs a complete scan around the substantially vertical axis.

2. A control system according to claim 1, wherein the Lidar has a scanning beam which performs a 360 degree scan around the substantially vertical axis.

3. A control system according to claim 1, comprising a plurality of Lidars each arranged to perform a portion of a complete scan around the substantially vertical axis.

4. A control system according to any of the preceding claims, wherein the measure of velocity and measure of variance are derived from fast Fourier transforms (FFT) of signals received from the plurality of points in the measurement volume.

5. A control system according to any of the preceding claims, wherein the controller comprises a look-up table of wind velocity against measure of variance.

6. A control system according to any of the preceding claims, wherein the velocity and variance inputs are averaged over a plurality of scans.

7. A control system according to any preceding claim, wherein the remote sensing apparatus is arranged on the wind turbine nacelle.

8. A control system according to any of the preceding claims, wherein controller derives a peak velocity from the velocity data.

9. A control system according to any of the preceding claims, wherein the Lidar is a single beam Lidar.

10. A wind turbine having a control system according to any preceding claim.

11. A method of controlling a wind turbine, comprising:
sensing a wind parameter with a Lidar apparatus at a measurement volume a predetermined distance along a look direction from the Lidar apparatus, the sensing comprising scanning the look direction around a substantially vertical axis and generating an output signal;
controlling a parameter of the wind turbine based on the output signal from the Lidar apparatus, the output signal being received and processed by a controller to output a control signal based on the output signals;
wherein the Lidar generates velocity data from a plurality of points in the measurement volume, and wherein the controller derives a measure of velocity and a measure of variance from the velocity data, and where the controller generates the output control signal from inputs of velocity and variance to generate an output control signal if the controller determines that the inputs indicate a risk of damage to turbine components, the method being **characterised by** the Lidar apparatus and the wind turbine being arranged such that the Lidar apparatus performs a complete scan around the substantially vertical axis.

12. A method of controlling according to claim 11, wherein the wind turbine is in a parked state.

13. A method of controlling according to claim 11, wherein the wind turbine is in an operating state.

## Patentansprüche

1. Steuersystem für eine Windturbine, Folgendes umfassend:
eine LIDAR-Vorrichtung, die zum Abtasten um eine im Wesentlichen vertikale Achse auf der Windturbine montiert ist, und die eine Blickrichtung zum Messen eines Windparameters in einem Messvolumen in einem vorbestimmten Abstand zur LIDAR-Vorrichtung aufweist;
und
eine Steuervorrichtung zum Empfangen von Signalen von der LIDAR-Vorrichtung und zum Ausgeben eines Steuersignals basierend auf den empfangenen Signalen zum Steuern eines Parameters der Windturbine
wobei LIDAR Geschwindigkeitsdaten von einer Vielzahl von Punkten im Messvolumen erzeugt, und wobei die Steuervorrichtung aus den Geschwindigkeitsdaten ein Maß für die Geschwindigkeit und ein Maß für die Varianz ableitet, und wo die Steuervorrichtung das Ausgangssteuersignal aus den Eingängen von Geschwindigkeit und Varianz erzeugt, um ein Ausgangssteuersignal zu erzeugen, falls die Steuervorrichtung bestimmt, dass die Eingänge auf eine Gefahr der Beschädigung von Turbinenkomponenten hinweisen, wobei das System **dadurch gekennzeichnet ist, dass** die LIDAR-Vorrichtung und die Windturbine angeordnet sind, sodass die LIDAR-Vorrichtung eine vollständige Abtastung um die im Wesentlichen vertikale Achse durchführt.

2. Steuersystem nach Anspruch 1, wobei LIDAR einen Abtaststrahl aufweist, der eine 360-Grad-Abtastung um die im Wesentlichen vertikale Achse durchführt.

3. Steuersystem nach Anspruch 1, eine Vielzahl von LIDAR umfassend, die jeweils angeordnet sind, um einen Teil einer vollständigen Abtastung um die im Wesentlichen vertikale Achse durchzuführen.

4. Steuersystem nach einem der vorhergehenden Ansprüche, wobei das Maß für die Geschwindigkeit und das Maß für die Varianz aus schnellen Fourier-Transformationen (FFT) von Signalen abgeleitet werden, die von der Vielzahl von Punkten im Messvolumen empfangen werden.

5. Steuersystem nach einem der vorhergehenden Ansprüche, wobei die Steuervorrichtung eine Zuordnungstabelle der Windgeschwindigkeit gegenüber dem Maß für die Varianz umfasst.

6. Steuersystem nach einem der vorhergehenden Ansprüche, wobei die Geschwindigkeits- und Varianzeingänge über eine Vielzahl von Abtastungen gemittelt werden.

7. Steuersystem nach einem vorhergehenden Anspruch, wobei die Fernerfassungsvorrichtung an der Windturbinengondel angeordnet ist.

8. Steuersystem nach einem der vorhergehenden Ansprüche, wobei die Steuervorrichtung eine Spitzengeschwindigkeit aus den Geschwindigkeitsdaten ableitet.

9. Steuersystem nach einem der vorhergehenden Ansprüche, wobei LIDAR ein Einzelstrahl-Wind-LIDAR ist.

10. Windturbine, die ein Steuersystem nach einem vorhergehenden Anspruch aufweist.

11. Verfahren zum Steuern einer Windturbine, Folgendes umfassend:
Erfassen eines Windparameters mit einer LIDAR-Vorrichtung mit einem Messvolumen in einem vorbestimmten Abstand entlang einer Blickrichtung von der LIDAR-Vorrichtung, wobei die Erfassung das Abtasten der Blickrichtung um eine im Wesentlichen vertikale Achse und das Erzeugen eines Ausgangssignals umfasst;
Steuern eines Parameters der Windturbine basierend auf dem Ausgangssignal von der LIDAR-Vorrichtung, wobei das Ausgangssignal durch eine Steuervorrichtung empfangen und verarbeitet wird, um ein Steuersignal basierend auf den Ausgangssignalen auszugeben;
wobei LIDAR Geschwindigkeitsdaten aus einer Vielzahl von Punkten im Messvolumen erzeugt, und wobei die Steuervorrichtung aus den Geschwindigkeitsdaten ein Maß für die Geschwindigkeit und ein Maß für die Varianz ableitet, und wo die Steuervorrichtung das Ausgangssteuersignal aus den Eingängen für die Geschwindigkeit und die Varianz erzeugt, um ein Ausgangssteuersignal zu erzeugen, falls die Steuervorrichtung bestimmt, dass die Eingänge auf eine Gefahr der Beschädigung von Turbinenkomponenten hinweisen, wobei das Verfahren **dadurch gekennzeichnet ist, dass** die LIDAR-Vorrichtung und die Windturbine angeordnet sind, sodass die LIDAR-Vorrichtung eine vollständige Abtastung um die im Wesentlichen vertikale Achse durchführt.

12. Verfahren zum Steuern nach Anspruch 11, wobei die Windturbine in einem abgestellten Zustand ist.

13. Verfahren zum Steuern nach Anspruch 11, wobei die Windturbine in einem Betriebszustand ist.

## Revendications

1. Système de commande pour une éolienne, comprenant :
un appareil Lidar monté sur l'éolienne pour le balayage autour d'un axe sensiblement vertical et ayant une direction de visée pour la mesure d'un paramètre de vent dans un volume de mesure à une distance prédéterminée de l'appareil Lidar ;
et
un dispositif de commande pour la réception de signaux de l'appareil Lidar et l'émission d'un signal de commande sur la base des signaux reçus pour commander un paramètre de l'éolienne
dans lequel le Lidar génère des données de vitesse à partir d'une pluralité de points dans le volume de mesure, et dans lequel le dispositif de commande déduit une mesure de vitesse et une mesure de variance des données de vitesse, et où le dispositif de commande génère le signal de commande de sortie à partir d'entrées de vitesse et de variance pour générer un signal de commande de sortie si le dispositif de commande détermine que les entrées indiquent un risque de dommage aux composants de turbine, le système étant **caractérisé en ce que** l'appareil Lidar et l'éolienne sont agencés de telle sorte que l'appareil Lidar effectue un balayage complet autour de l'axe sensiblement vertical.

2. Système de commande selon la revendication 1, dans lequel le Lidar a un faisceau de balayage qui effectue un balayage de 360 degrés autour de l'axe sensiblement vertical.

3. Système de commande selon la revendication 1, comprenant une pluralité de Lidars chacun agencé pour effectuer une partie d'un balayage complet autour de l'axe sensiblement vertical.

4. Système de commande selon l'une quelconque des revendications précédentes, dans lequel la mesure de vitesse et la mesure de variance sont déduites des transformées de Fourier rapide (FFT) de signaux reçus de la pluralité de points dans le volume de mesure.

5. Système de commande selon l'une quelconque des revendications précédentes, dans lequel le dispositif de commande comprend une table de correspondance entre la vitesse du vent et la mesure de variance.

6. Système de commande selon l'une quelconque des revendications précédentes, dans lequel la moyenne des entrées de vitesse et de variance est calculée sur une pluralité de balayages.

7. Système de commande selon l'une quelconque des revendications précédentes, dans lequel l'appareil de détection à distance est agencé sur la nacelle d'éolienne.

8. Système de commande selon l'une quelconque des revendications précédentes, dans lequel le dispositif de commande déduit une vitesse de pointe des données de vitesse.

9. Système de commande selon l'une quelconque des revendications précédentes, dans lequel le Lidar est un Lidar à faisceau unique.

10. Éolienne ayant un système de commande selon l'une quelconque des revendications précédentes.

11. Procédé de commande d'une éolienne, comprenant :
la détection d'un paramètre de vent avec un appareil Lidar à un volume de mesure à une distance prédéterminée le long d'une direction de visée de l'appareil Lidar, la détection comprenant le balayage de la direction de visée autour d'un axe sensiblement vertical et la génération d'un signal de sortie ;
la commande d'un paramètre de l'éolienne sur la base du signal de sortie de l'appareil Lidar, le signal de sortie étant reçu et traité par un dispositif de commande pour émettre un signal de commande sur la base des signaux de sortie ;
dans lequel le Lidar génère des données de vitesse à partir d'une pluralité de points dans le volume de mesure, et dans lequel le dispositif de commande déduit une mesure de vitesse et une mesure de variance des données de vitesse, et où le dispositif de commande génère le signal de commande de sortie à partir d'entrées de vitesse et de variance pour générer un signal de commande de sortie si le dispositif de commande détermine que les entrées indiquent un risque de dommage aux composants de turbine, le procédé étant **caractérisé en ce que** l'appareil Lidar et l'éolienne sont agencés de telle sorte que l'appareil Lidar effectue un balayage complet autour de l'axe sensiblement vertical.

12. Procédé de commande selon la revendication 11, dans lequel l'éolienne est dans un état immobilisé.

13. Procédé de commande selon la revendication 11, dans lequel l'éolienne est dans un état opérationnel.
